# EUROPEAN PATENT APPLICATION

(11) **EP 2 708 377 A1**
(43) Date of publication of application: **19.03.2014**
(21) Application number: 13466020.8
(22) Date of filing: 11.09.2013
(51) Int. Cl.: B60B 39/02, B60B 39/08, B60B 39/10

(54) **System of one-off strewing for twin-trace motor vehicles**

(30) Priority: 13.09.2012 CZ 20120631
(71) Applicant: Kroupa, Augustin, 43003 Chomutov (CZ)
(72) Inventor: Kroupa, Augustin, 43003 Chomutov (CZ)
(74) Representative: Langrova, Irena

(57) **Abstract**

The invention relates to a device which makes it possible for the driver to activate own strewing of the roadway with the strewing material in case of glaze ice on the roadway when the vehicle can become even uncontrollable. The device consists of at least one strewing-material container (1), located so that, after opening, the strewing material may pour down in front of braked and/or controllable wheels of the vehicle. The hermetically closed strewing-material container (1), closed with the removable cap (2) on its bottom part, can be connected to the compressed-air container (5) by means of the air duct (3), said container (5) being equipped with the electrically or pneumatically controlled closing valve (4), or the container (1) can be joined with the expansion chamber (11), equipped with the gas generator (12). The spraying, performed by this device, lasts several seconds and the driver has more chance to govern the critical situation during this time interval.

## Description

### Field of Engineering

The invention relates to a device which enables to a driver, in case of glazed ice on a roadway, to activate one-off strewing on the roadway in troublesome situation and due to it, even in timely limited interval, to achieve rise of friction between the tires and the roadway.

### State of the Prior Art

Despite the continuous progress in motor vehicles structure where various anti-block and antiskid systems etc have been developed in the last years, the glazed ice on a roadway remains to be dangerous cause of many accidents. Often, the glazed ice surprises drivers quite suddenly and unexpectedly. In disastrous situations the technological maintenance of roadways often fails to treat all roadway sections swiftly due to which some places on roadways are dangerous in a given moment. Therefore, the drivers are endangered with increase risk of accident and the sanitary service vehicle drivers, police drivers and those of mass traffic etc are exposed to such conditions very often.

Even despite many efforts to improve these conditions, we do not find out till now that satisfactory solution of this problem had been found. At the same time, as a result of incessantly increasing velocities, traffic density and character on roadways, it becomes more acute steadily.

According to proposed invention the device does not replace the technical roadway maintenance and the systematic strewing is not in question. It is a supporting means which has to increase the driver's chance to avoid the loss of control of a vehicle in troublesome situation or to reduce consequences of relevant accident at least.

### Substance of the Invention

The substance of the invention is to create a one-off strewing system structure for twin-trace motor vehicles. It is equipped with one strewing-material container at least, located so that after opening the strewing material may be poured in front of braked and/or controllable wheels of the vehicle. Advantageously, it is the case of location of two strewing material containers in the front bumper of the vehicle in front of fore-wheels. In such case the strewing is utilized both by fore-wheels and rear wheels of the vehicle. On the bottom part each hermetically-closed strewing-material container is equipped with a removable cap, e.g. a rubber cap. Further, it is joined with an air duct, e.g. a hose, to a compressed-air container. The compressed-air container is equipped with an electrically or pneumatically controlled valve. In such case it is suitable if the compressed-air container is in a form of an air tank existing already in the vehicle, especially the air tank being part of the air distribution for brakes or velocity changing of the vehicle. After opening of the valve on the compressed-air container, the compressed air penetrates into the strewing-material container, pushes out the cap and the strewing material pours on the roadway.

However, in a variant solution the strewing-material container can be joined to an expansion chamber, equipped with a gas generator. After initiating the gas generator, e.g. with an electric current, the pressure penetrates into the strewing-material container, the caps are shot out and the strewing material is loosened. In this text, with the expression "the gas generator" a device is meant which is named *Gasgenerator* or *Generateur de gaz* etc in the world. Czech producer uses also the expression inflator for this device and as the gas generator he denotes the own filling of this device in a form of tablets.

In a variant solution, the cap can have a form of lid, attachable by welding, which is joined with a pre-stressed spring. The connection of the weldable lid and the pre-stressed spring can be made indirectly or e.g. by means of a Bowden cable. The weldable lid can be made of aluminium or plastic foil and, during production, can be thermally welded to a plastic neck of the strewing-material container which is a principle known e.g. in the food-processing industry. Nevertheless, it is advantageous if the strewing material containers are equipped with a thread at outlet orifices and are closed with a threaded closing. This closing itself is closed with a lid attachable by welding. This is advantageous for the production-technology reasons especially. If there is a need to start the system, the pre-stressed spring is released from the rider's seat due to which the weldable lid is detached and the strewing material is poured down on the roadway.

In other variant solution the cap can have a form of a lid of brittle or splitable material respectively, said lid being equipped with an ignition cord or other pyrotechnic charge, located outside the container volume. With needing to start the system, the pyrotechnic system is activated owing to which the lid is broken and drops off and the strewing material is poured down on the roadway.

In an especially advantageous realization it is suitable if a moisture-absorbing stuff is also located inside the container besides the strewing material. The humidity-absorbing stuff can be e.g. the silicagel. The humidity-absorbing stuff prevents the strewing material from freezing in winter season.

To ensure satisfactory air-tightness, the air-duct-inlet orifice into the container is closed with a plug. The plug can be pushed out from the air duct into the strewing- material container by overpressure. On one hand, the plug prevents the strewing material from getting in touch with the potentially humid air in the air duct and, on the other hand, it prevents the strewing material from pouring into the air duct and obstructing it.

The strewing, made with the described invention, is one-off and lasts till discharging of the strewing-material containers. During it the driver has increased chance to govern the critical situation, to equalize the slip, to stop or to slow down.

In all given structural solutions the driver gives an impulse to start the device working in the moment he gets involved in critical situation. The impulse to start the device working can also be given by an electronic control system of the vehicle in case the driver had chosen it.

The system is outlined so that the structure is subordinated purposefully to the condition to restore, as far as possible easily, the function of the device after having been used, i.e. to replace the discharged strewing material in containers with full ones and to activate the device again.

In existing vehicles the conditions to install the strewing system are individual according to the vehicle type. The container size is limited here by the given structure too. In passenger cars the orifices for inserting the containers from below can be made mostly in plastic covers in front of fender shields. This is not very comfortable of course. In deciding about the device installation the service difficulties on one hand and the safety contribution on the other one stand on the plates of scale.

In recently made vehicles it is possible to create pockets to insert the containers from above comfortably.

### Survey of Figures on the Drawings

The exemplary embodiment of the invention is described with relation to drawings as follows:
Fig. 1 - diagrammatic view of the device with the compressed-air container,
Fig. 2 - diagrammatic view of the strewing-material container location in the vehicle front part,
Fig. 3 - diagrammatic view of the device with the expansion chamber and the gas generator,
Fig. 4 - strewing-material container with the closing and the weldable-on lid,
Fig. 5 - detail of the head with the lid of brittle-material.

### Examples on the Invention embodiment

### Example no. 1

The one-off strewing system for twin-trace motor vehicles, according to the proposed invention, consists of the air-tightly shut strewing-material container 1 closed with the rubber cap 2. The strewing-material container 1 is joined with the compressed-air container 5 by means of the hose-shaped air duct 3 over the closing valve 4. The closing valve 4 can be governed e.g. electrically, hydraulically or pneumatically. After opening the valve 4, the compressed air gets into the strewing-material container 1 owing to which the rubber cap 2 drops down and the strewing material pours on the roadway. Initially, the compressed air supports pouring, later the strewing material pours out in the free fall till the container 1 is discharged. The intensity and lasting time of pouring depends on the outlet-orifice cross section of the container 1 and the volume thereof. To prevent the container 1 content from freezing, the strewing material is filled into the container 1 in good dried-out condition. To hold dry environment, humidity absorbing stuff can be inserted into the container, e.g. the silcagel. To prevent the humidity from penetrating into the air space of the container 1, the inlet orifice 6 of the container 1 is closed with the rubber plug 7 which is driven out with the compressed air after device activation. The described device can be installed in a vehicle in two ways: in the first case the described device is installed entirely individually on the vehicle left side and separately on the right one, with only the control being common. In the second case, there is a common compressed-air container 5 on both sides for the strewing-material containers 1. In this case a breaches pipe is placed behind the valve 4 in the air duct 3.

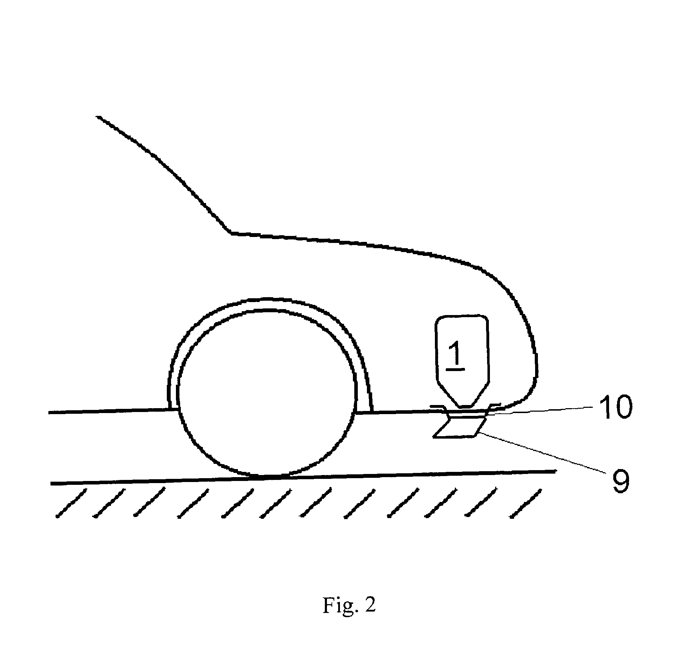

The strewing-material containers 1 are located in front of braked wheels or most advantageously of fore-wheels of the vehicle - Fig. 2. To rectify the strewing-material flow, rectifying extensions 9 can be used in existing vehicles. The discharged containers 1 are replaced by full ones e.g. from below through the orifice which is closed with the cover 10 and equipped with an orifice for passage of the strewing material. After using the device, the discharged containers 1 are replaced by full ones and connected to the air duct 3 simultaneously. Further, the container 5 is filled with the compressed air through the filling valve 8. The container 3 is equipped with a pressure gauge and a mud valve.

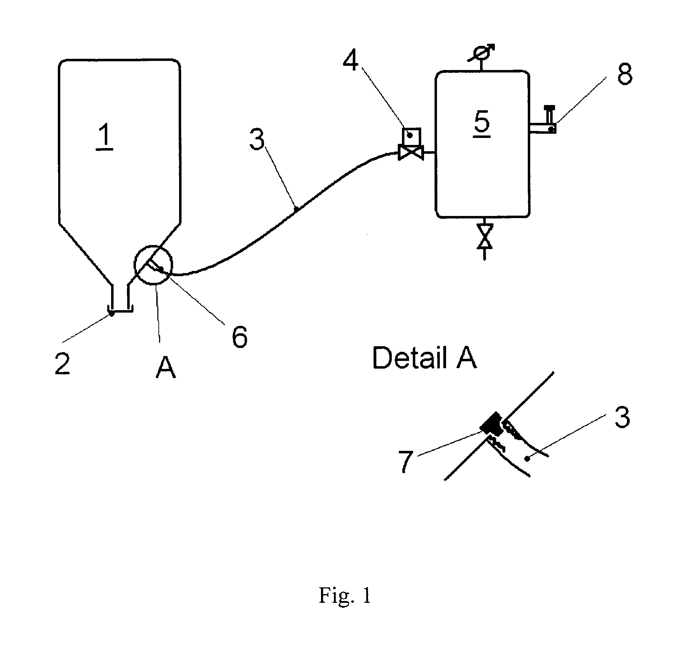

The described device is obvious on the Figs 1 and 2.

### Example no. 2

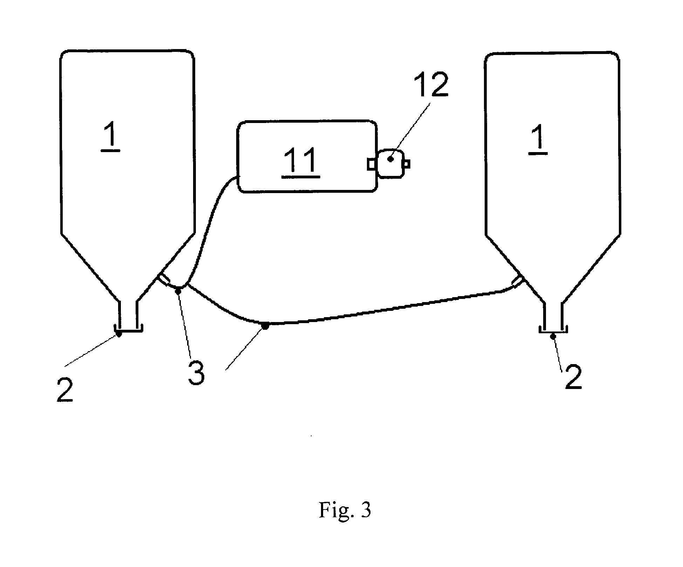

The one-off strewing system for twin-trace motor vehicles, in compliance with the proposed invention, differs from the Example no. 1 in that the expansion chamber 11 is used instead of the compressed-air container 5 and the valve 4, said expansion chamber 11 being equipped with the gas generator 12 which is initiated by electric current. In this case the gas generator 12 is a conventional airbag cartridge. After initiating the gas generator 12, the pressure penetrates into the containers 1 and the caps 2 are thrown away. The charge size of the gas generator 12 is chosen so that the loosen-gas pressure may push away the caps 2 surely without damaging the plastic containers 1. On the Fig 3 the realization with the expansion chamber 11 is shown which is common for the left and right containers 1. After using the device, the discharged containers 1 are replaced by full ones which are joined to the air duct 3. Further, the gas generator 12 is changed.

The described device can be seen on the Fig. 3.

### Example no. 3

The one-off strewing system for twin-trace motor vehicles, according to the proposed invention, consists of hermetically closed strewing-material containers 1 which are equipped with a thread on the outlet neck and are shut with the threaded closing 13. The closing 13 is equipped with plastic weldable lids 14 which can be removed mechanically. These weldable lids 14 are connected to a non-shown pre-stressed spring by means of a Bowden cord. In pre-stressed condition the spring is secured with a catch, governed e.g. by an electric servo-drive. The pre-stressed spring can be common for both the left and right containers. After loosening of the pre-stressed spring, the weldable lids 14 are ripped off and the strewing material is poured out. The air-tight connection of the container 1 with the closing 13 can be made e.g. by mutual locating with overlapping of diameters and pressure joining during the filling of containers 1.

After using of the device, the containers 1 are changed inclusive of the closings 13 and weldable lids 14. The pre-stressed spring is strained manually.

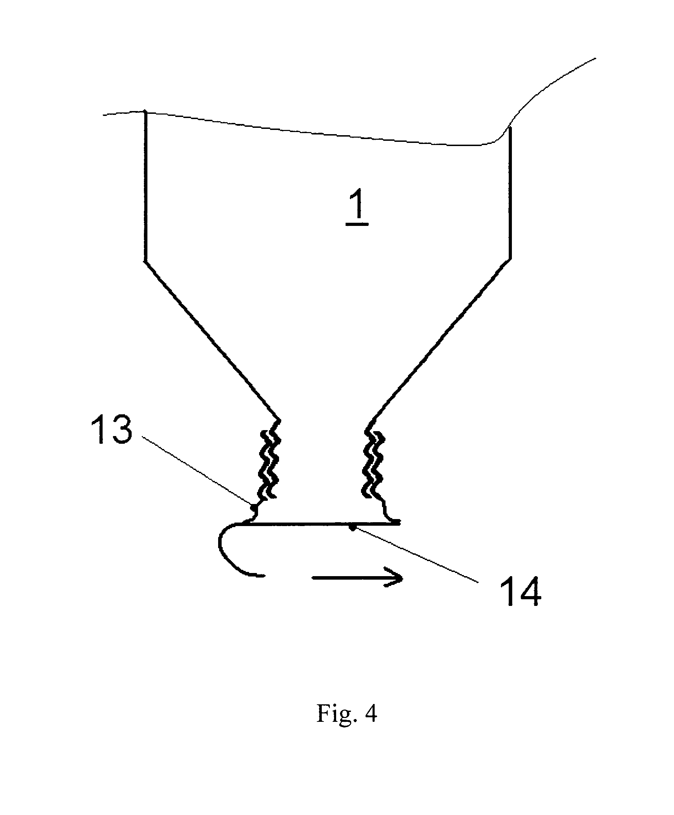

The container realization with the closing is obvious on the Fig. 4.

### Example no. 4

The one-off strewing system for twin-trace motor vehicles, according to the proposed invention, consists of hermetically closed strewing-material containers 1 which are equipped with a thread on the outlet neck and are closed with the threaded head 15. The air-tight connection of the container 1 with the head 15 can be achieved e.g. by mutual location with overlapping of diameters and with pressure joining during the filling of containers 1. The head 15 is closed with the lid 16 of brittle material. Into the lid 16 the explosive cord 17 is placed which is connected to an electric circuit. After initiating the explosive cord 17 the lid 16 is destroyed and drops down due to which the strewing material is loosened. Instead of the explosive cord other pyrotechnic charge can be used as well. The explosive cord 17 or other pyrotechnic charge is located outside the closed volume of the container 1 so that with destroying the lid 16, the container 1 is not exposed to pressure wave from inside. After using the device the head 15 is cleared of the rests of the lid 16 and is reposed into a salvage of plastics together with the discharged container 1, thereafter new containers 1 are inserted and the system is connected to an electric circuit with a connector.

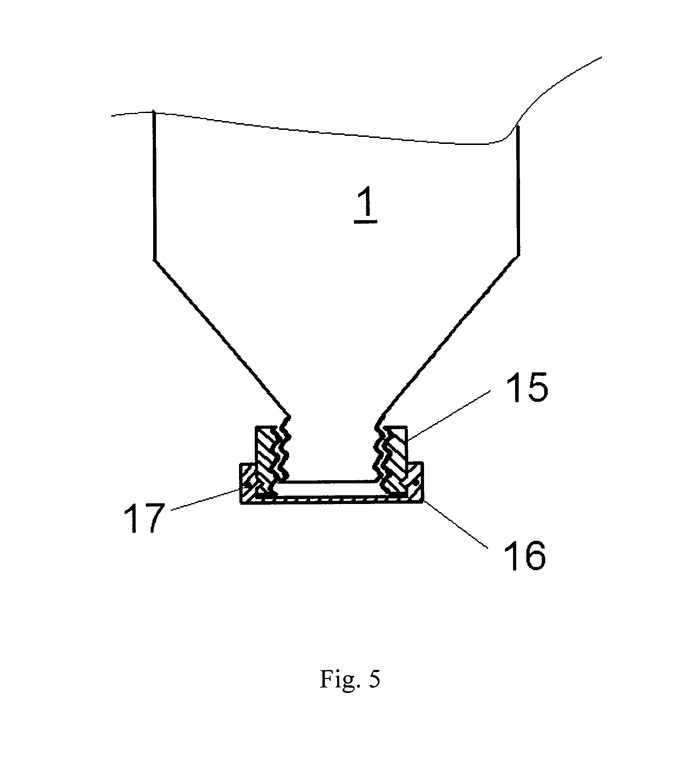

The realization of the container with the head can be seen on Fig. 5.

### List of Reference Symbols

- 1 -: container
- 2 -: cap
- 3 -: air duct
- 4 -: closing valve
- 5 -: compressed-air container
- 6 -: inlet orifice
- 7 -: plug
- 8 -: valve
- 9 -: extension
- 10 -: cover
- 11 -: expansion chamber
- 12 -: gas generator
- 13 -: closing
- 14 -: weldable-on lid
- 15 -: head
- 16 -: lid
- 17 -: explosive cord

## Claims

1. The one-off strewing system for twin-trace motor vehicles with at least one strewing-material container located so that after opening of said container the strewing material may pour down in front of braked wheels and/or controllable wheels of the vehicle, **characterized in that** the hermetically closed strewing-material container (1), closed with removable cap (2) on the bottom part, is connected to the compressed-air container (5) by means of the air duct (3), said container (5) being equipped with the valve (4), or being joined with the expansion chamber (11) equipped with the gas generator (12).

2. The one-off strewing system for twin-trace motor vehicles according to the Claim 1, **characterized in that** the compressed air container (5) has a form of an air tank, existing already in the vehicle, especially of the air tank belonging to the air distribution for brakes and/or for gear shifting of the vehicle.

3. The one-off strewing system for twin-trace motor vehicles according to the Claim 1 or 2, **characterized in that** the cap (2) has a form of the weldable lid (14) which is joined with the pre-stressed spring.

4. The one-off strewing system for twin-trace motor vehicles according to the Claim 1 or 2, **characterized in that** the cap (2) has a form of the lid (16) which is equipped with the explosive cord (17) or other pyrotechnic cartridge, located out of the volume of the container (1).

5. The one-off strewing system for twin-trace motor vehicles according to some of the Claims 1 to 4, **characterized in that** inside the container (1), besides the strewing material, also the humidity-absorbing stuff is located, e.g. the silica gel.

6. The one-off strewing system for twin-trace motor vehicles according to some of the Claims 1 to 5, **characterized in that** the inlet orifice (6) of the air duct (3) into the strewing-material container (1) is closed with the plug (7) pushable by overpressure from the air duct (3) into the container (1).
